# EUROPÄISCHE PATENTANMELDUNG

(11) **EP 4 008 475 A1**
(43) Veröffentlichungstag der Anmeldung: **08.06.2022**
(21) Anmeldenummer: 20211908.7
(22) Anmeldetag: 04.12.2020
(51) Int. Cl.: B23Q 11/10, B24B 23/00, B24B 55/02

(54) **WERKZEUGMASCHINE MIT EINEM VORDEREN HANDGRIFF UND EINER REGULIERUNGSEINHEIT**

(71) Anmelder: Hilti Aktiengesellschaft, 9494 Schaan (LI)
(72) Erfinder: Holzmeier, Georg, 86748 Marktoffingen (DE); Meuer, Roland, 86833 Ettringen (DE)
(74) Vertreter: Hilti Aktiengesellschaft Corporate Intellectual Property

(57) **Zusammenfassung**

Die vorliegende Erfindung betrifft eine Werkzeugmaschine mit mindestens einem vorderen Handgriff und einem Werkzeug, wobei das Werkzeug während des Betriebs der Werkzeugmaschine mit einer Kühlflüssigkeit gekühlt werden kann. Die Werkzeugmaschine weist eine Regulierungseinheit für eine Bereitstellung der Kühlflüssigkeit auf, wobei die Regulierungseinheit ein Ventil zur Einstellung einer Menge an Kühlflüssigkeit aufweist und an dem vorderen Handgriff integriert vorliegt.

## Beschreibung

Die vorliegende Erfindung betrifft eine Werkzeugmaschine mit mindestens einem vorderen Handgriff und einem Werkzeug, wobei das Werkzeug während des Betriebs der Werkzeugmaschine mit einer Kühlflüssigkeit gekühlt werden kann. Die Werkzeugmaschine weist eine Regulierungseinheit für eine Bereitstellung der Kühlflüssigkeit auf, wobei die Regulierungseinheit ein Ventil zur Einstellung einer Menge an Kühlflüssigkeit aufweist und an dem vorderen Handgriff integriert vorliegt.

### Hintergrund der Erfindung:

Im Bereich der Werkzeugmaschine sind Trennschleifer bekannt, mit denen beispielsweise auch Schnitte in harten und schwer zu bearbeitenden Untergründen, wie Beton, eingebracht werden können. Solche Trennschleifer werden im Sinne der Erfindung bevorzugt als Betontrennschleifer bezeichnet. Solche Trennschleifer, die auch für das Schneiden von Beton vorgesehen sind, benötigen für die Kühlung der als Werkzeug eingesetzten Trennscheibe ein Kühlmittel, das beispielsweise Wasser umfassen kann. Um die Zuführung des Kühlmittels zu regulieren, ist üblicherweise ein Ventil vorgesehen, das zum einen dazu ist, den Wasserfluss ein- und auszustellen und zum andern die Wassermenge zu regulieren. Meist sind diese Ventile direkt am Anschluss des Wasserschlauchs angebracht oder sie werden als zusätzliche Baugruppe extern an den meistverwendeten umlaufenden Handgriff des Trennschleifers befestigt.

Die genannten Anbringungsarten weisen allerdings wesentliche Nachteile auf. Zum einen stellt der konventionelle Anbringungsort, der aus dem Stand der Technik bekannt ist, eine ergonomisch nachteilige Position dar, da die Bedienung des Ventils schlecht zugänglich ist und dazu zumindest eine Hand des Anwenders die Halteposition am Handgriff verlassen muss. Dies führt insbesondere dann zu Problemen, wenn das Ventil direkt am Wasseranschluss der Werkzeugmaschine angebracht ist, und stellt eine Gefahr für den Anwender dar, da bei laufendem Gerät diese nur noch mit einer Hand gehalten werden kann. Oft ist aber für die Beurteilung der zugeführten Menge an Kühlflüssigkeit ein Laufen der Werkzeugmaschine notwendig, da nur durch die rotierende Schneidscheibe beurteilt werden kann, ob genügend Kühlwasser in den Bereich der Schneidsegmente gelangt. Mit anderen Worten kann insbesondere während des Betriebs des Trennschleifers geprüft werden, ob die zugeführte Kühlwassermenge ausreichend ist, um eine ausreichend große Kühlung der Trennscheibe zu bewirken.

Zum andern ist eine zusätzliche Anbringung am umlaufenden Handgriff meist exponiert und anfällig für Beschädigungen während des Betriebs der Werkzeugmaschine und insbesondere bei Stürzen, da das Ventil nicht zusätzlich vor Stößen geschützt ist.

Die Aufgabe, die der vorliegenden Erfindung zugrunde liegt, besteht darin, die vorstehend beschriebenen Mängel und Nachteile des Standes der Technik zu überwinden und eine Werkzeugmaschine bereitzustellen, bei der das Ventil für die Zuführung einer Kühlflüssigkeit zum Kühlen des Werkzeugs der Werkzeugmaschine gut geschützt gegenüber Stürzen und Stößen ist. Darüber hinaus soll das Ventil für den Nutzer gut zugänglich und einsehbar sein, so dass eine ergonomische Handhabung der Werkzeugmaschine ermöglicht wird. Es wäre ferner wünschenswert, wenn bei der bereitzustellenden Werkzeugmaschine der Kühlmittelanschluss selbst ebenfalls gut gegenüber mechanischen Beeinträchtigungen geschützt werden könnte, wobei der Kühlmittelanschluss insbesondere einen Schlauch zur Zuführung des Kühlmittels an das Werkzeug der Werkzeugmaschine umfasst.

Die Aufgabe wird gelöst durch den Gegenstand des unabhängigen Anspruchs. Vorteilhafte Ausführungsformen zu dem Gegenstand des unabhängigen Anspruchs finden sich in den abhängigen Ansprüchen.

### Beschreibung der Erfindung:

Erfindungsgemäß ist eine Werkzeugmaschine mit mindestens einem vorderen Handgriff und einem Werkzeug vorgesehen, wobei das Werkzeug während des Betriebs der Werkzeugmaschine mit einer Kühlflüssigkeit gekühlt werden kann. Die Werkzeugmaschine weist eine Regulierungseinheit für eine Bereitstellung der Kühlflüssigkeit auf, wobei die Regulierungseinheit ein Ventil zur Einstellung einer Menge an Kühlflüssigkeit aufweist und an dem vorderen Handgriff integriert vorliegt. Die Erfindung ermöglicht vorteilhafterweise die vorzugsweise vollständige Integration der Regulierungseinheit im vorderen Handgriff der Werkzeugmaschine, die eine Abkehr von üblichen Montageorten der Regulierungseinheit bzw. des Ventils bei Werkzeugmaschinen bedeutet. Dadurch kann insbesondere eine bessere Einsehbarkeit und eine verbesserte Zugänglichkeit des Ventilhebels ermöglicht werden. Dies erleichtert für den Nutzer der Werkzeugmaschine die Bedienung der Kühlflüssigkeitszuführung bzw. die Einstellung der Kühlflüssigkeitsmenge. Außerdem kann das Ventil bzw. die Regulierungseinheit durch die integrierte Anbringung an dem vorderen Handgriff der Werkzeugmaschine in einer besonders gut geschützten Lage der Werkzeugmaschine angeordnet werden, so dass durch die Integration des Ventils bzw. der der Regulierungseinheit in den vorderen Handgriff ein unerwünschtes Abbrechen des Ventilhebels bei Stürzen und größeren Stößen während der Anwendung bzw. des Betriebs der Werkzeugmaschine sicher vermieden wird. Die Regulierungseinheit kann im Sinne der Erfindung bevorzugt auch als Ventileinheit bezeichnet werden.

Bei den Werkzeugmaschinen kann es sich vorzugsweise um einen Trennschleifer oder einen Betontrennschleifer handeln. Die Regulierungseinheit für die Kühlflüssigkeit und das Ventil werden bevorzugt durch den vorderen Handgriff vollständig umfasst und so vor großen Stößen, wie beispielsweise bei Stürzen, besonders wirksam geschützt. Vorteilhaft ist im Kontext der vorliegenden Erfindung die Anbringung des Ventils an einer leicht für den Anwender zugänglichen Stelle. Dies gilt insbesondere dann, wenn der Nutzer während der Bedienung des Ventils die Werkzeugmaschine betreiben und mit den Händen stabil halten möchte. Insbesondere ermöglicht die Erfindung eine Anbringung des Ventils in einer ergonomisch günstigen Lage für die Regulierung des Kühlwassers, da der Ventilhebel sehr gut sicht- und erreichbar für den Anwender ist.

Es ist im Sinne der Erfindung bevorzugt, dass der vordere Handgriff der Werkzeugmaschine bzw. des Trennschleifers als umlaufender Handgriff ausgebildet ist. Der Begriff «umlaufend» stellt für den Fachmann keinen unklaren Begriff dar, weil der Fachmann weiß, dass vordere Handgriffe im Bereich der Werkzeugmaschinen üblicherweise um das Gehäuse oder den Hauptkörper des Geräts herum verlaufen. Mit anderen Worten umschließen solche vorderen Handgriffe Gehäuse oder den Hauptkörper der Werkzeugmaschine zumindest teilweise, wodurch zum einen eine stabile Führung der Werkzeugmaschine durch den Nutzer ermöglicht wird. Zum anderen wird die Maschine durch den bevorzugt umlaufenden vorderen Handgriff wirksam vor mechanischen Beschädigungen geschützt, beispielsweise gegenüber Stößen oder beim Fallen.

Der vordere Handgriff wird bei Rechtshändern üblicherweise von der linken Hand umschlossen. Insbesondere größere Maschinen weisen häufig einen zweiten Handgriff auf, der im Sinne der Erfindung als hinterer Handgriff bezeichnet wird. Der hintere Handgriff wird bei Rechtshändern üblicherweise von der rechten Hand umschlossen. Er kann vorzugsweise als C- oder D-förmiger Griff ausgebildet sein. Es ist im Sinne der Erfindung bevorzugt, dass die Werkzeugmaschine sowohl einen ersten, vorderen Handgriff, als auch einen zweiten, hinteren Handgriff umfasst. Die oben beschriebenen Nachteile der herkömmlichen Montageorte des Ventils einer Werkzeugmaschine, insbesondere eines (Beton-)Trennschleifers, kann vorteilhafterweise durch die im Wesentlichen vollständige Integration des Ventils bzw. der Regulierungseinheit im vorderen Handgriff der Werkzeugmaschine vermieden werden. Die Kühlflüssigkeitszuführung wird dabei durch den bevorzugt umlaufenden Handgriff im Wesentlichen vollständig umfasst und so vor schweren Stößen, zum Beispiel bei Stürzen, geschützt. Vorteilhaft ist hier auch die Anbringung der Regulierungseinheit an einer leicht für den Anwender zugänglichen Stelle. Dies insbesondere dann, wenn der Nutzer für die Bedienung des Ventils die bevorzugt zwei Handgriffe des Trennschleifers weiter mit seinen Händen halten möchte.

Bei Betrieb der Werkzeugmaschine rotiert das Werkzeug der Maschine und kann einen Schnitt in einem zu bearbeitenden Untergrund erzeugen. Wenn es sich bei der Werkzeugmaschine um einen Trennschleifer oder um einen Betontrennschleifer handelt, stellt das Werkzeug vorzugsweise eine im Wesentlichen kreisförmige Trennscheibe dar, die zur Verbesserung der Schneide- oder Trennleistung mit Diamanten besetzt sein kann ("Diamant-Trennscheibe"). Bei der Erzeugung des Schnitts in dem zu bearbeitenden Untergrund wird auch Wärme produziert, die üblicherweise durch die Zuführung eines Kühlmittels, insbesondere einer Kühlflüssigkeit, abgeführt wird. Mit anderen Worten kann eine Kühlflüssigkeit zum Kühlen des Werkzeugs der Werkzeugmaschine verwendet werden. Mit noch anderen Worten kann ein bevorzugt fluides Kühlmittel zum Kühlen der Trennscheibe der Werkzeugmaschine eingesetzt werden. Bei der Kühlflüssigkeit kann es sich vorzugsweise um Wasser handeln, das aber mit Zusätzen versehen sein kann. Aufgrund der bevorzugten Verwendung von Wasser als Kühlmittel kann das Ventil im Sinne der Erfindung bevorzugt auch als Wasserventil bezeichnet werden. Das Ventil ist Bestandteil der Regulierungseinheit, wobei die Regulierungseinheit dazu eingerichtet, eine mit dem Ventilhebel einstellbare Menge an Kühlflüssigkeit in den Bereich der Trennscheibe der Werkzeugmaschine abzugeben. Dabei ist es bevorzugt, dass die Menge an Kühlflüssigkeit oder Kühlwasser vorzugsweise stufenlos zwischen 0 und 100 % eingestellt werden kann. Das bedeutet im Sinne der Erfindung bevorzugt, dass das Ventil beispielsweise im Wesentlichen vollständig geschlossen sein kann (Durchflussmenge: ca. 0 % einer maximal möglichen oder Nenn-Durchflussmenge) oder im Wesentlichen vollständig geöffnet vorliegen kann (Durchflussmenge: ca. 100 % einer maximal möglichen oder Nenn-Durchflussmenge). Selbstverständlich können aber auch alle Zwischenwerte zwischen 0 und 100 % mittels des Ventils eingestellt werden, wie beispielsweise 3 %, 10 %, 16,67 %, 25 %, 30 %, 33,3%, 45 %, 50 %, 75 %, 83,3 % oder 98 %, ohne darauf beschränkt zu sein.

Es ist im Sinne der Erfindung bevorzugt, dass der vordere Handgriff eine Öffnung zur Aufnahme der Regulierungseinheit umfasst. Mit anderen Worten ist am vorderen bevorzugt umlaufenden Handgriff der Werkzeugmaschine eine Öffnung für die Regulierungseinheit vorgesehen, um das Wasserventil in den vorderen Handgriff zu integrieren. Es ist im Sinne der Erfindung bevorzugt, dass die Öffnung im Wesentlichen vollständig vom Handgriff umfasst wird. Die der Regulierungseinheit kann dann in dieser Öffnung angebracht werden.

Es ist im Sinne der Erfindung bevorzugt, dass das Ventil einen Ventilkörper umfasst, wobei der Ventilkörper eine obere lineare Führung und eine untere lineare Führung zur Führung des Ventilkörpers in der Öffnung des vorderen Handgriffs aufweist. Es ist im Sinne der Erfindung besonders bevorzugt, dass der Ventilkörper in seinem oberen und in seinem unteren Bereich jeweils eine lineare Führung zum vorderen Handgriff aufweist. Es stellt einen besonderen Vorteil dieser bevorzugten Ausgestaltung der vorgeschlagenen Werkzeugmaschine dar, dass eine seitliche Führung durch zwei lineare Führungen oben und unten am Ventilkörper bereitgestellt kann. Es ist im Sinne der Erfindung bevorzugt, dass die Führungen jeweils mindestens eine Nut umfassen, wobei die Nuten mit Federn am vorderen Handgriff der Werkzeugmaschine zusammenwirken. Mit anderen Worten ist es bevorzugt, dass der vordere Handgriff Federn aufweist, die mit den Nuten der oberen und unteren linearen Führungen so zusammenwirken, dass der Ventilkörper stabil und unkompliziert in die Öffnung des vorderen Handgriffs eingeführt werden kann.

Es ist im Sinne der Erfindung bevorzugt, dass die linearen Führungen jeweils eine Nut-Feder-Verbindung umfassen. Mit anderen Worten ist es im Sinne der Erfindung bevorzugt, dass die obere Führung und/oder die untere Führung eine Nut-Feder-Verbindung umfasst. In einer alternativen Ausgestaltung der Erfindung können die Federn oben und unten am Ventilkörper angebracht sein, welche durch jeweils zwei seitliche Nutführungen am Handgriff geführt werden. Der Ventilkörper kann zur Montage in die beiden Nutführungen eingeführt und bis zum Endanschlag am Handgriff gedrückt werden. Damit die Regulierungseinheit im vorderen Handgriff der Werkzeugmaschine verbleibt, kann sie in der Richtung der linearen Führungen mittels Schrauben bzw. einer Verschnappung durch eine Schnapphakenverbindung gesichert sein. Mit anderen Worten ist es im Sinne der Erfindung bevorzugt, dass die Regulierungseinheit durch ein Befestigungsmittel in dem vorderen Handgriff gehalten wird. Bei diesem Befestigungsmittel kann es sich beispielsweise um Schrauben oder eine Verschnappung handeln. Es ist im Sinne der Erfindung besonders bevorzugt, dass eine Schnapphakenverbindung verwendet wird, um die der Regulierungseinheit in dem Handgriff bzw. seiner Öffnung zu befestigen bzw. zu halten.

Es ist im Sinne der Erfindung bevorzugt, dass die Regulierungseinheit der Werkzeugmaschine einen Anschluss für einen Schlauch umfasst, um die Kühlflüssigkeit bereitzustellen. Dieser Anschluss stellt vorzugsweise eine Schnittstelle zwischen dem Schlauch auf der einen Seite und der Regulierungseinheit bzw. dem Ventil auf der anderen Seite dar. Es ist im Sinne der Erfindung bevorzugt, dass die Schnittstelle so ausgebildet ist, dass eine einfache und auch schnell wieder lösbare Montage des Schlauches ermöglichst wird. Bei dem Schlauch handelt es sich vorzugsweise um denjenigen Schlauch, mit dem die Kühlflüssigkeit von der Regulierungseinheit zur Schutzhaube bzw. zum Werkzeug des Trennschleifers geführt wird. Es ist im Sinne der Erfindung bevorzugt, dass der Schlauchanschluss an der Seite der Regulierungseinheit angeordnet ist, die dem Werkzeug bzw. der Schutzhaube des Trennschleifers zugewandt ist. Vorzugsweise verlässt dieser Schlauch die Regulierungseinheit auf der Seite des vorderen Handgriffs des Trennschleifers, die ebenfalls dem Werkzeug bzw. der Schutzhaube des Trennschleifers zugewandt ist.

Tests haben gezeigt, dass der Anschluss für einen Schlauch, um die Kühlflüssigkeit bereitzustellen, im Rahmen der vorliegenden Erfindung besonders gut gegenüber mechanischen, äußeren Einflüssen, wie Stößen oder Stürzen, geschützt ist. Insbesondere ermöglicht die Erfindung einen geschützten Anschluss des Verbindungsschlauchs an das Ventil zur Weiterleitung des Kühlwassers an die Schutzhaube. Die Vorsehung der Schnittstelle zwischen dem Schlauch und dem Ventil bzw. der Regulierungseinheit ermöglicht insbesondere einen besonders guten Schutz des bevorzugt innenliegenden Wasseranschlusses durch den umlaufenden Handgriff, was ein Abbrechen der Schnittstelle beispielsweise im Betrieb der Werkzeugmaschine und bei Stürzen besonders wirksam verhindert. Vorzugsweise kann der Anschluss für einen Schlauch zur Zuführung des Kühlmittels an das Werkzeug der Werkzeugmaschine in dem vorderen Handgriff integriert vorliegen. Es ist im Sinne der Erfindung bevorzugt, dass der Kühlmittelanschluss besonders gut gegenüber mechanischen Beeinträchtigungen geschützt wird, wobei der Kühlmittelanschluss insbesondere einen Schlauch zur Zuführung des Kühlmittels umfasst. Es ist im Sinne der Erfindung bevorzugt, den Schlauch auch als Zwischenschlauch oder Verbindungsschlauch zu bezeichnen.

Der Schlauchanschluss ist vorzugsweise so gestaltet, dass sie gut für den Anwender montierbar und auch wieder lösbar ist. Es ist im Sinne der Erfindung bevorzugt, dass der Schlauchanschluss in Richtung der Strömung der Kühlflüssigkeit hinter der Regulierungseinheit angeordnet ist. Der Bereich "in Richtung der Strömung der Kühlflüssigkeit hinter der Regulierungseinheit" ist der in Strömungsrichtung auf die Regulierungseinheit folgende Bereich, der insbesondere zwischen der Regulierungseinheit und einem Kühlflüssigkeitsanschluss des Werkzeugs der Werkzeugmaschine angeordnet vorliegt. Das Werkzeug der Werkzeugmaschine ist vorzugsweise als Trennscheibe ausgebildet und üblicherweise von einer Schutzhaube umgeben. Es ist im Sinne der Erfindung bevorzugt, dass diese Schutzhaube des Werkzeugs der Werkzeugmaschine einen Anschluss für den Kühlflüssigkeitsschlauch aufweist, so dass durch diesen Schlauch Kühlflüssigkeit vom Ventil bzw. von der Regulierungseinheit zum Werkzeug der Werkzeugmaschine transportiert werden kann. Der Anschlussbereich für den Kühlflüssigkeitsschlauch an der Regulierungseinheit ist vorteilhafterweise so angeordnet, dass er durch den umfassenden vorderen Handgriff besonders gut geschützt ist und bei Stürzen nicht abbrechen kann. Es ist im Sinne der Erfindung bevorzugt, den Schlauchanschluss als zweiten Anschluss der Regulierungseinheit zu bezeichnen.

Neben dem Schlauchanschluss, der in Strömungsrichtung der Kühlflüssigkeit hinter der Regulierungseinheit liegt, kann die Regulierungseinheit einen weiteren Anschluss aufweisen, durch den Kühlflüssigkeit in die Regulierungseinheit eintreten kann. Dieser Anschluss kann im Sinne der Erfindung auch als erster Anschluss der Regulierungseinheit bezeichnet werden. Es ist im Sinne der Erfindung bevorzugt, dass dieser erste Anschluss der Regulierungseinheit in Strömungsrichtung des Kühlwassers vor der Regulierungseinheit angeordnet ist. Mit Hilfe des ersten Anschlusses der Regulierungseinheit kann insbesondere eine Verbindung der Regulierungseinheit zum Hauswassernetz oder zu einem Wassermanagementsystem hergestellt werden, um die Wasserversorgung der Werkzeugmaschine sicherzustellen.

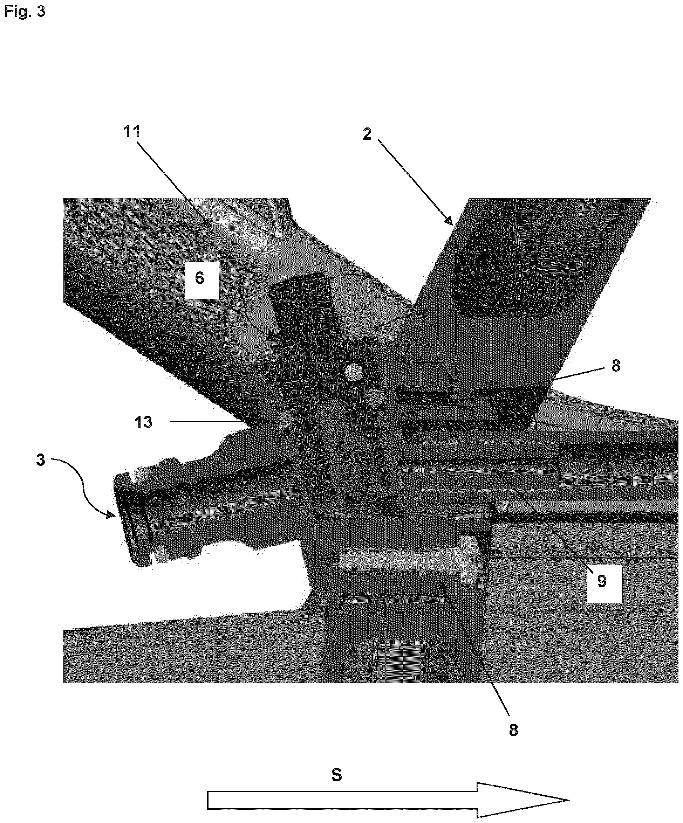

Es ist im Sinne der Erfindung bevorzugt, dass die Kühlflüssigkeit durch den ersten Anschluss in die Regulierungseinheit eintritt und die Regulierungseinheit durch den zweiten Anschluss verlässt. Vom zweiten Anschluss der Regulierungseinheit gelangt die Kühlflüssigkeit in den Zwischenschlauch, durch den die Kühlflüssigkeit in Richtung des Werkzeugs der Werkzeugmaschine geleitet bzw. transportiert wird. Die bevorzugte Strömungsrichtung der Kühlflüssigkeit ist in Fig. 3 eingezeichnet.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung des Ventils bzw. der Regulierungseinheit und ihre Anordnung an der Werkzeugmaschine
- Fig. 2: Ansicht einer bevorzugten Ausgestaltung des Ventils der Regulierungseinheit und ihre Anordnung an der Werkzeugmaschine
- Fig. 3: Schnittdarstellung einer bevorzugten Ausgestaltung des Ventils der Regulierungseinheit
- Fig. 4: Detailansicht einer bevorzugten Ausgestaltung des vorderen Handgriffs und der Öffnung zur Aufnahme der Regulierungseinheit
- Fig. 5: verschiedene Ansichten von bevorzugten Ausführungsformen der Kühlflüssigkeitsregulierungseinheit der Werkzeugmaschine
- Fig. 6: verschiedene Ansichten von bevorzugten Ausführungsformen des vorderen Handgriffs der Werkzeugmaschine

### Ausführungsbeispiele und Figurenbeschreibung:

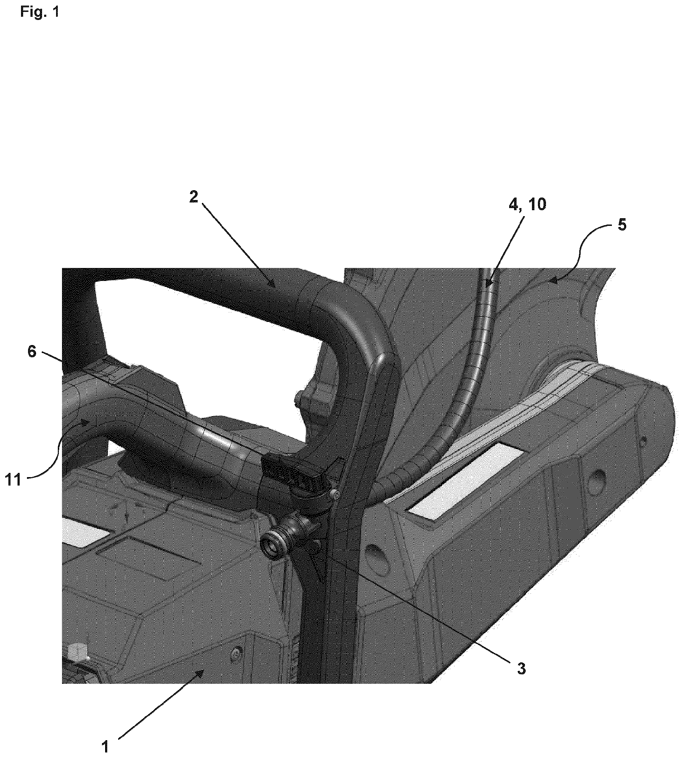

Figur 1 zeigt eine Ansicht einer bevorzugten Ausgestaltung des Ventils 6 und seiner Anordnung an der Werkzeugmaschine 1. In Fig. 1 wird von einem hinteren Bereich der Werkzeugmaschine 1 in Richtung des Werkzeugs 5 der Werkzeugmaschine 1 geschaut. Zwischen dem vorderen Handgriff 2 der Werkzeugmaschine 1 und der Schutzhaube des Werkzeugs 5 der Werkzeugmaschine liegt ein Schlauch 10 angeordnet vor, mit dem Kühlflüssigkeit 4 vom Ventil 6 bzw. von einer Regulierungseinheit 12 zum Werkzeug 5 geleitet werden kann. Bei der Werkzeugmaschine 1 kann es sich um einen Trennschleifer handeln, der insbesondere in der Lage ist, Schnitte in einen Beton-Untergrund einzubringen. Das Werkzeug 5 des Trennschleifers 1 ist dabei insbesondere eine Trennscheibe, die mit einer Schutzhaube (ohne Bezugszeichen) gegenüber dem Nutzer der Werkzeugmaschine 1 abgedeckt werden kann. Die Werkzeugmaschine 1 umfasst vorzugsweise einen vorderen Handgriff 2 und einen hinteren Handgriff 11, wobei das Ventil 6 bzw. die Regulierungseinheit 12 insbesondere am vorderen Handgriff 2 des Trennschleifers 1 integriert vorliegen. Die Regulierungseinheit 12 kann ferner einen ersten Anschluss 3 für die Kühlflüssigkeit 4 aufweisen, mit der die Kühlflüssigkeit 4 in die Regulierungseinheit 12 gelangen kann.

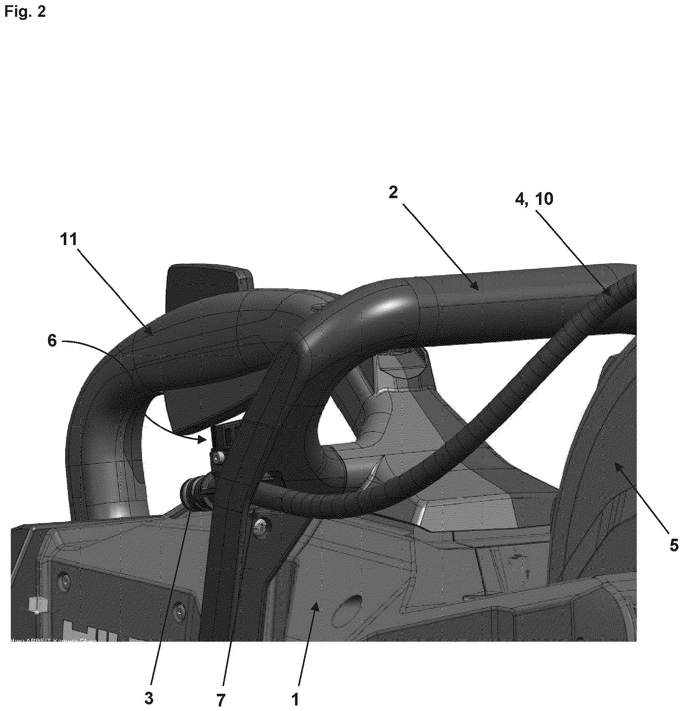

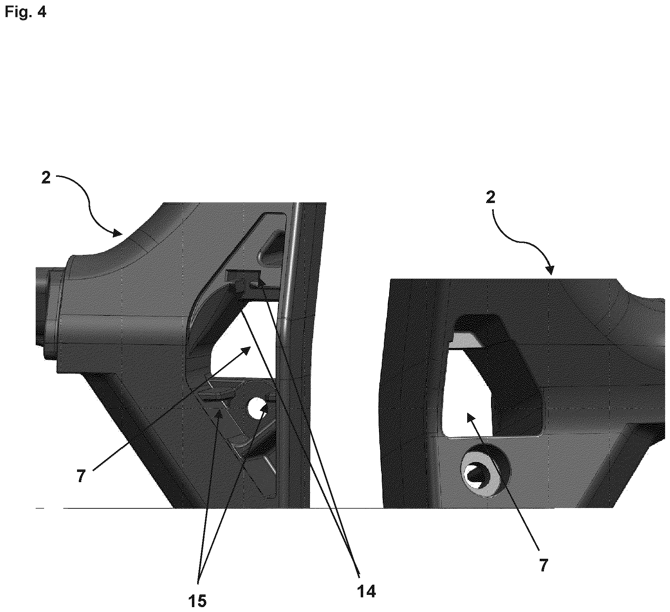

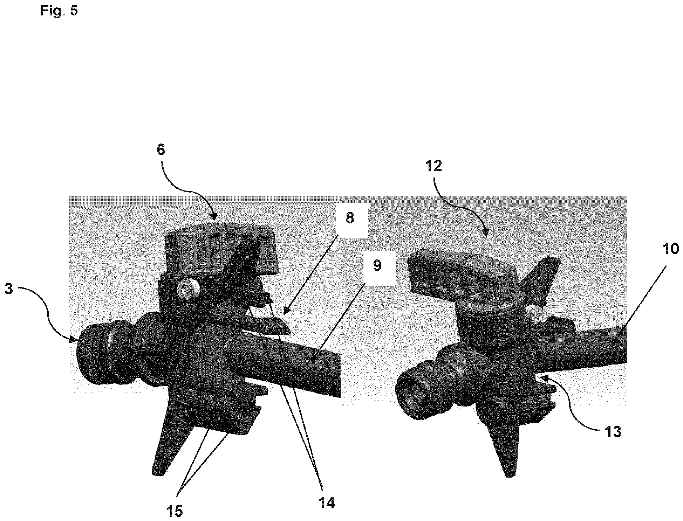

Dazu kann der vordere Handgriff 2 eine Öffnung 7 umfassen, die in den Fig. 2 und 4 dargestellt wird. Fig. 2 zeigt eine Ansicht einer bevorzugten Ausgestaltung des Ventils 6 bzw. der Regulierungseinheit 12 und ihre Anordnung an der Werkzeugmaschine 1. Dabei wird in Fig. 2 von der Schutzhaube der Trennscheibe 5 in Richtung des hinteren Handgriffs 11 der Werkzeugmaschine 1 geschaut. In die Öffnung 7 des vorderen Handgriffs 2 kann eine Reguliereinheit 12 für die Menge an Kühlflüssigkeit 4, mit der die Trennscheibe 5 gekühlt wird, eingebracht werden. Diese Reguliereinheit 12 umfasst insbesondere einen ersten Anschluss 3 für die Kühlflüssigkeit 4, sowie das Ventil 6. Die Reguliereinheit 12 wird insbesondere auch in Fig. 5 dargestellt. Der erste Anschluss 3, durch den Kühlflüssigkeit 4, insbesondere Kühlwasser, in die Regulierungseinheit 12 eintreten kann, ist in Fig. 3 auf der linken Hälfte der Regulierungseinheit 12 dargestellt.

Fig. 3 zeigt eine Schnittdarstellung einer bevorzugten Ausgestaltung des Ventils 6 bzw. der Regulierungseinheit 12 und ihre Anordnung an der Werkzeugmaschine 1. Im Vordergrund von Fig. 3 ist der vordere Handgriff 2 und die Reguliereinheit 12 für die Kühlflüssigkeit 4 dargestellt, während im Hintergrund von Fig. 3 der hintere Handgriff 11 der Werkzeugmaschine 1 dargestellt wird. Es ist im Kontext der Erfindung vorgesehen, dass die Werkzeugmaschine 1 eine Regulierungseinheit 12 für die Kühlflüssigkeit 4 umfasst, wobei das Ventil 6 Bestandteil der Regulierungseinheit 12 ist. Ferner umfasst die Reguliereinheit 12 einen ersten Anschluss 3 für die Kühlflüssigkeit 4. Die Reguliereinheit 12 umfasst neben diesem ersten Anschluss 3 für die Kühlflüssigkeit 4 auch Befestigungsmittel 8, mit denen die Regulierungseinheit an der Werkzeugmaschine 1 befestigt werden kann. Mit anderen Worten können die Befestigungsmittel 8 Bestandteil der Regulierungseinheit 12 sein. Die Befestigungsmittel 8 sind vorzugsweise dazu eingerichtet, die Regulierungseinheit 12 bzw. das Ventil 6 an der Werkzeugmaschine 1 bzw. an dem vorderem Handgriff 2 zu befestigen.

Damit die Regulierungseinheit 12 im vorderen Handgriff 2 des Trennschleifers 1 verbleibt, kann die Regulierungseinheit 12 bzw. das Ventil 6 mit Schrauben und/oder einer Verschnappung als Befestigungsmittel 8 an der Werkzeugmaschine 1 befestigt werden. Die Befestigungsmittel 8 können insbesondere eine Schnapphakenverbindung umfassen, mit der die Regulierungseinheit 12 oder das Ventil 6 an der Werkzeugmaschine 1 gesichert werden kann/können. Es ist im Sinne der Erfindung besonders bevorzugt, dass eine Schnapphakenverbindung als Befestigungsmittel 8 verwendet wird, um das Ventil 6 bzw. die Regulierungseinheit 12 in dem vorderen Handgriff 2 bzw. seiner Öffnung 7 zu befestigen.

In Fig. 3 wird ferner ein Anschluss 9 für den Schlauch 10 dargestellt, wobei die Kühlflüssigkeit 4 mit dem Schlauch 10 in Richtung der Trennscheibe 5 geleitet werden kann. Der Anschluss 9 ist vorzugsweise Bestandteil der Regulierungseinheit 12; er wird im Sinne der Erfindung bevorzugt auch als zweiter Anschluss oder Schlauchanschluss bezeichnet, der in Strömungsrichtung der Kühlflüssigkeit 4 hinter der Regulierungseinheit 12 liegt. Es ist im Sinne der Erfindung bevorzugt, dass der Anschluss 9 für den Schlauch 10 in dem vorderen Handgriff 2 der Werkzeugmaschine 1 integriert vorliegt. Vorzugsweise kann der Schlauchanschluss 9 auch als Schnittstelle bezeichnet werden. Der zweite Anschluss 9, durch den die Kühlflüssigkeit 4 die Regulierungseinheit 12 verlässt, ist in Fig. 3 auf der rechten Seite der Regulierungseinheit 12 dargestellt. Ferner wird in Fig. 3 mit dem Pfeil in der unteren Bildhälfte die Strömungsrichtung S der Kühlflüssigkeit 4 dargestellt.

Fig. 4 zeigt eine Detailansicht einer bevorzugten Ausgestaltung des vorderen Handgriffs 2 und der Öffnung 7 zur Aufnahme der Regulierungseinheit 12 der Werkzeugmaschine 1. Dargestellt wird in Fig. 4 insbesondere eine untere lineare Führung 15 am vorderen Handgriff 2 der Werkzeugmaschine 1, die beispielsweise auf beiden Seiten Federn aufweisen kann. Diese Federn können mit Nuten zusammenwirken, die Bestandteile eines Gegenparts der unteren linearen Führung 15 an einem Ventilkörper 13 des Ventils 6 der Regulierungseinheit 12 sind. Diese Nuten der unteren linearen Führung 15 des Ventilkörper 13 liegen bevorzugt an beiden Seiten des Ventilkörpers vor und werden in Fig. 5 dargestellt.

Ferner zeigt Fig. 4 eine obere lineare Führung 14, die am vorderen Handgriff 2 angeordnet vorliegt und auf beiden Seiten jeweils eine Nut aufweist. Diese Nuten können mit Federn zusammenwirken, die Bestandteile eines Gegenparts der oberen linearen Führung 14 am Ventilkörper 13 des Ventils 6 der Regulierungseinheit 12 sind. Diese Federn der oberen linearen Führung 14 des Ventilkörper 13 liegen bevorzugt an beiden Seiten des Ventilkörpers vor und werden in Fig. 5 dargestellt.

Fig. 5 zeigt verschiedene Ansichten von bevorzugten Ausführungsformen der Kühlflüssigkeitsregulierungseinheit 12 der Werkzeugmaschine 1. Zu sehen sind insbesondere das Ventil 6, der erste Anschluss 3, der zweite Anschluss 9 und der Schlauch 10, sowie die Befestigungsmittel 8.

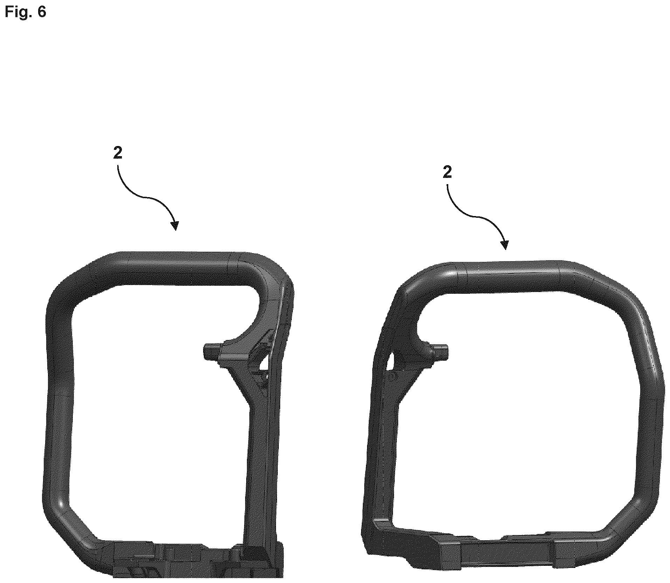

Fig. 6 zeigt verschiedene Ansichten von bevorzugten Ausführungsformen des vorderen Handgriffs 2 der Werkzeugmaschine 1.

### Bezugszeichenliste

- 1: Werkzeugmaschine
- 2: vorderer Handgriff
- 3: Zuführung für die Kühlflüssigkeit zum Kühlen des Werkzeugs der Werkzeugmaschine, erster Anschluss
- 4: Kühlflüssigkeit
- 5: Werkzeug der Werkzeugmaschine
- 6: Ventil
- 7: Öffnung zur Aufnahme des Ventils
- 8: Befestigungsmittel
- 9: Anschluss, zweiter Anschluss
- 10: Schlauch
- 11: hinterer Handgriff
- 12: Regulierungseinheit
- 13: Ventilkörper
- 14: obere lineare Führung
- 15: untere lineare Führung
- S: Strömungsrichtung der Kühlflüssigkeit

## Patentansprüche

1. Werkzeugmaschine (1) mit mindestens einem vorderen Handgriff (2) und einem Werkzeug (5), wobei das Werkzeug (5) während des Betriebs der Werkzeugmaschine (1) mit einer Kühlflüssigkeit (4) kühlbar ist,
**dadurch gekennzeichnet, dass**
die Werkzeugmaschine (1) eine Regulierungseinheit (12) für eine Bereitstellung der Kühlflüssigkeit (4) aufweist, wobei die Regulierungseinheit (12) ein Ventil (6) zur Einstellung einer Menge an Kühlflüssigkeit (4) aufweist, wobei die Regulierungseinheit (12) an dem vorderen Handgriff (2) integriert vorliegt.

2. Werkzeugmaschine (1) nach Anspruch 1
**dadurch gekennzeichnet, dass**
der vordere Handgriff (2) als umlaufender Handgriff ausgebildet ist.

3. Werkzeugmaschine (1) nach Anspruch 1 oder 2
**dadurch gekennzeichnet, dass**
der vordere Handgriff (2) eine Öffnung (7) zur Aufnahme der Regulierungseinheit (12) umfasst.

4. Werkzeugmaschine (1) nach einem der vorhergehenden Ansprüche
**dadurch gekennzeichnet, dass**
das Ventil (6) einen Ventilkörper (13) umfasst, wobei der Ventilkörper (13) eine obere lineare Führung (14) und eine untere lineare Führung (15) zur Führung des Ventilkörpers (13) in der Öffnung (7) des vorderen Handgriffs (2) aufweist.

5. Werkzeugmaschine (1) nach Anspruch 4
**dadurch gekennzeichnet, dass**
die obere lineare Führung (14) und/oder die untere lineare Führung (15) eine Nut-Feder-Verbindung umfasst.

6. Werkzeugmaschine (1) nach Anspruch 4 oder 5
**dadurch gekennzeichnet, dass**
die Führungen (14, 15) jeweils mindestens eine Nut umfassen, wobei die Nut mit Fedem am vorderen Handgriff (2) der Werkzeugmaschine (1) zusammenwirken.

7. Werkzeugmaschine (1) nach einem der vorhergehenden Ansprüche
**dadurch gekennzeichnet, dass**
die Regulierungseinheit (12) durch Befestigungsmittel (8) in dem vorderen Handgriff (2) gehalten wird.

8. Werkzeugmaschine (1) nach einem der vorhergehenden Ansprüche
**dadurch gekennzeichnet, dass**
die Regulierungseinheit (12) einen Anschluss (9) für einen Schlauch (10) umfasst, um die Kühlflüssigkeit (4) bereitzustellen.

9. Werkzeugmaschine nach Anspruch 8
**dadurch gekennzeichnet, dass**
der Anschluss (9) für den Schlauch (10) in dem vorderen Handgriff (2) integriert vorliegt.

10. Werkzeugmaschine (1) nach einem der vorhergehenden Ansprüche
**dadurch gekennzeichnet, dass**
die Werkzeugmaschine (1) einen hinteren Handgriff (11) umfasst.
